# EUROPEAN PATENT APPLICATION

(11) **EP 4 378 687 A1**
(43) Date of publication of application: **05.06.2024**
(21) Application number: 22848885.4
(22) Date of filing: 02.03.2022
(51) Int. Cl.: B33Y 30/00, B33Y 50/02, B29C 64/135, B29C 64/268, B29C 64/393, G02B 26/08

(54) **STEREOLITHOGRAPHY DEVICE**

(30) Priority: 30.07.2021 JP 2021126143
(71) Applicant: Sony Group Corporation, Tokyo 108-0075 (JP)
(72) Inventor: KONO, Yusuke, Tokyo 108-0075 (JP)
(74) Representative: D Young & Co LLP
(86) International application number: PCT/JP2022/008991
(87) International publication number: WO 2023/007801

(57) **Abstract**

To form a cured portion quickly. A stereolithography apparatus includes a splitting/coupling unit, a first spatial light modulation unit, and a second spatial light modulation unit. The splitting/coupling unit splits incident light applied to a photocurable resin to form a cured portion, in a first direction and a second direction, couples light incident from the first direction and light incident from the second direction, and emits the coupled light in a third direction. The first spatial light modulation unit is arranged in the first direction to modulate a light beam from the splitting/coupling unit into a light beam having a first pattern that is a pattern of the cured portion and emits the light beam having the first pattern to the splitting/coupling unit, for coupling. The second spatial light modulation unit is arranged in the second direction to modulate a light beam from the splitting/coupling unit to a light beam having a second pattern in the vicinity of the first pattern and emits the light beam having the second pattern to the splitting/coupling unit, for coupling.

## Description

### Field

The present disclosure relates to a stereolithography apparatus.

### Background

Stereolithography apparatuses have been used to form a fabricated object by piling up layers of a cured portion formed by applying laser light to a photocurable resin for curing. For example, apparatuses are used to form the fabricated object by generating a pattern beam based on the shape of the cured portion, with a spatial light modulator spatially modulating laser light, and applying the pattern beam to the photocurable resin. A stereolithography apparatus has been proposed to divide a region to be irradiated with the laser light into a plurality of sections and irradiate each section with the pattern beam to cure the photocurable resin (e.g., see Patent Literature 1).

### Citation List

### Patent Literature

Patent Literature 1: JP 2009-132127 A

### Summary

### Technical Problem

However, in the conventional art described above, one cured layer is formed by a plurality of times of irradiation with light, therefore, leading to a problem of decrease in throughput.

Therefore, the present disclosure proposes a stereolithography apparatus that forms a cured portion quickly.

### Solution to Problem

The present disclosure has been conceived to solve the problem described above, and the aspect thereof is a stereolithography apparatus includes: a splitting/coupling unit that splits incident light applied to a photocurable resin to form a cured portion, in a first direction and a second direction, couples light beams obtained by splitting incident light and being incident from the first direction and the second direction, and emits the coupled light in a third direction; and a first spatial light modulation unit that is arranged in the first direction to modulate a light beam from the splitting/coupling unit into a light beam having a first pattern having a pattern of the cured portion, and emit the light beam having the first pattern to the splitting/coupling unit, for coupling of the light beam having the first pattern; and a second spatial light modulation unit that is arranged in the second direction to modulate a light beam from the splitting/coupling unit into a light beam having a second pattern in the vicinity of the first pattern, and emit the light beam having the second pattern to the splitting/coupling unit, for coupling of the light beam having the second pattern.

### Brief Description of Drawings

FIG. 1 is a diagram illustrating an exemplary configuration of a stereolithography apparatus according to a first embodiment of the present disclosure.
FIG. 2A is a diagram illustrating two-photon absorption polymerization according to an embodiment of the present disclosure.
FIG. 2B is a diagram illustrating curing of a photocurable resin by the two-photon absorption polymerization according to the embodiment of the present disclosure.
FIG. 3A is a diagram illustrating an example of forming cured portions according to an embodiment of the present disclosure.
FIG. 3B is a diagram illustrating an example of forming the cured portions according to the embodiment of the present disclosure.
FIG. 4 is a diagram illustrating an exemplary configuration of a stereolithography apparatus according to a second embodiment of the present disclosure.
FIG. 5A is a diagram illustrating two-photon absorption polymerization according to the second embodiment of the present disclosure.
FIG. 5B is a diagram illustrating a comparative example of the two-photon absorption polymerization.
FIG. 6 is a diagram illustrating another exemplary configuration of the stereolithography apparatus according to the second embodiment of the present disclosure.
FIG. 7 is a diagram illustrating an exemplary configuration of a stereolithography apparatus according to a third embodiment of the present disclosure.
FIG. 8 is a diagram illustrating another exemplary configuration of the stereolithography apparatus according to the third embodiment of the present disclosure.
FIG. 9 is a diagram illustrating another exemplary configuration of the stereolithography apparatus according to the third embodiment of the present disclosure.
FIG. 10 is a diagram illustrating another exemplary configuration of the stereolithography apparatus according to the third embodiment of the present disclosure.
FIG. 11 is a diagram illustrating an exemplary configuration of a stereolithography apparatus according to a fourth embodiment of the present disclosure.
FIG. 12 is a diagram illustrating two-photon absorption polymerization according to the fourth embodiment of the present disclosure.

### Description of Embodiments

Embodiments of the present disclosure will be described in detail below with reference to the drawings. The description will be given in the following order. Note that in the following embodiments, the same portions are denoted by the same reference numerals and symbols, and repetitive description thereof will be omitted.
1. First Embodiment
2. Second Embodiment
3. Third Embodiment
4. Fourth Embodiment

### (1. First Embodiment)

### [Configuration of stereolithography apparatus]

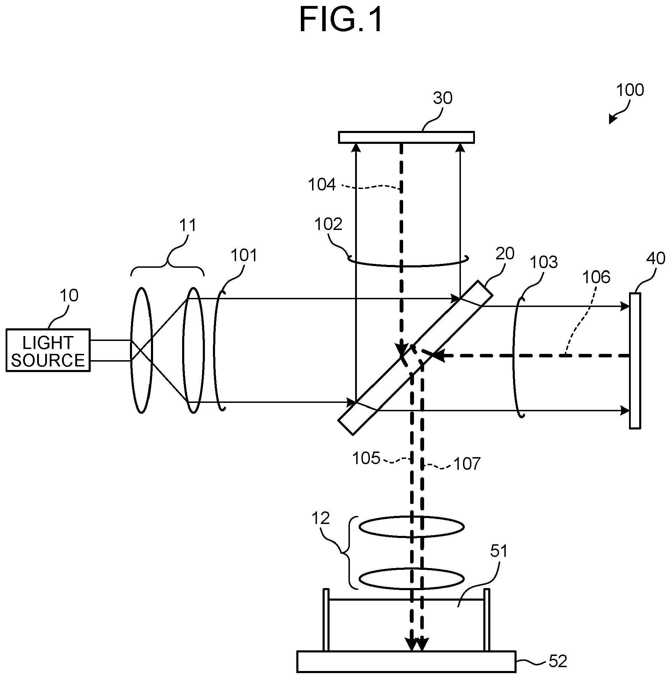

FIG. 1 is a diagram illustrating an exemplary configuration of a stereolithography apparatus according to a first embodiment of the present disclosure. FIG. 1 is a block diagram illustrating a configuration example of a stereolithography apparatus 100. The stereolithography apparatus 100 is an apparatus that cures a photocurable resin to form a fabricated object having a three-dimensional shape. The stereolithography apparatus 100 of FIG. 1 includes a light source 10, a first optical system 11, a splitting/coupling unit 20, a first spatial light modulation unit 30, a second spatial light modulation unit 40, a second optical system 12, a housing container 50, and a photocurable resin holding unit 52. In FIG. 1, a photocurable resin 51 is illustrated.

The light source 10 cures the photocurable resin 51 to generate light for forming a cured portion. For the light source 10, a laser light source that emits laser light can be used. A femtosecond laser light source can be used for the laser light source. For example, the femtosecond laser light source having a wavelength of 800 nm, a pulse width of less than 100 fs, a repetition frequency of 80 MHz, and an average intensity of 1 W can be used.

The first optical system 11 enlarges a beam diameter of light emitted from the light source 10. The light passing through the first optical system 11 is incident on the splitting/coupling unit 20. The light is referred to as incident light 101.

The splitting/coupling unit 20 splits the incident light 101 in a first direction and a second direction, couples light incident from the first direction and light incident from the second direction, and emits the coupled light in a third direction. In the splitting/coupling unit 20 of FIG. 1, the first direction corresponds to the upper side of the drawing, the second direction corresponds to the right side of the drawing, and the third direction corresponds to the lower side of the drawing. The splitting/coupling unit 20 splits the incident light 101 in the first direction by reflecting part of the incident light, and splits the incident light 101 in the second direction by transmitting part of the rest of the incident light 101.

A split beam 102 split in the first direction is incident on the first spatial light modulation unit 30 which is described later. The split beam 102 is modulated into a pattern beam 104 by the first spatial light modulation unit 30 and emitted toward the splitting/coupling unit 20. A split beam 103 split in the second direction is incident on the second spatial light modulation unit 40 which is described later. The split beam 103 is modulated into a pattern beam 106 by the second spatial light modulation unit 40 and emitted toward the splitting/coupling unit 20.

The pattern beam 104 and the pattern beam 106 correspond to the light incident on the splitting/coupling unit 20 from the first direction and the second direction, respectively. The splitting/coupling unit 20 couples the pattern beam 104 and the pattern beam 106. The splitting/coupling unit 20 emits a pattern beam 105 obtained by converting the pattern beam 104 transmitted therethrough, in the third direction. Furthermore, the splitting/coupling unit 20 emits a pattern beam 107 obtained by converting the pattern beam 106 reflected, in the third direction.

The first spatial light modulation unit 30 is arranged in the first direction to emit, to the splitting/coupling unit 20, the pattern beam 104 obtained by modulating the incident light from the splitting/coupling unit 20. This pattern beam 104 is a beam formed into a first pattern that is a pattern corresponding to the shape of a region where the photocurable resin 51 is to be cured.

The second spatial light modulation unit 40 is arranged in the second direction to emit, to the splitting/coupling unit 20, the pattern beam 106 obtained by modulating the incident light from the splitting/coupling unit 20. The pattern beam 106 is a beam formed into a second pattern. This second pattern is a pattern corresponding to the shape of a region where the photocurable resin 51 is to be cured, and is a pattern arranged in the vicinity of the first pattern. The second pattern is configured to have, for example, a shape adjacent to the first pattern, in a surface direction of the second spatial light modulation unit 40.

The first spatial light modulation unit 30 and the second spatial light modulation unit 40 are allowed to have a configuration in which the split beams 102 and 103 are reflected toward the splitting/coupling unit 20. The first spatial light modulation unit 30 and the second spatial light modulation unit 40 are configured to include, for example, a liquid crystal panel or a digital mirror device (DMD). Data of a pattern for each cured portion to be piled is input to the first spatial light modulation unit 30 and the second spatial light modulation unit 40, and the pattern beams 104 and 106 are generated by reflecting the split beams 102 and 103 according to the data.

In addition, two types of methods of intensity modulation and phase modulation are known for spatial light modulation. Any of these methods can be applied to the first spatial light modulation unit 30 and the second spatial light modulation unit 40.

Note that an optical path length from the splitting/coupling unit 20 to the splitting/coupling unit 20 via the first spatial light modulation unit 30 and an optical path length from the splitting/coupling unit 20 to the splitting/coupling unit 20 via the second spatial light modulation unit 40 are configured to be substantially equal to each other.

The second optical system 12 reduces optical images generated by the pattern beams 105 and 107 emitted from the splitting/coupling unit 20 to form an image in the vicinity of a surface of the photocurable resin holding unit 52.

The photocurable resin holding unit 52 is arranged in the third direction, having a surface on which the cured portion of the photocurable resin 51 is formed. The photocurable resin 51 is placed on the surface of the photocurable resin holding unit 52, and the light image generated by the pattern beams 105 and 107 is formed on an irradiated region near the surface. The light image cures the photocurable resin 51, and the cured portion is formed in the irradiated region. Thereafter, the photocurable resin holding unit 52 is lowered in a direction perpendicular to the surface by a drive mechanism which is not illustrated. Next, new pattern beams 105 and 107 are applied to form a second layer of the cured portion in the vicinity of the surface of the photocurable resin holding unit 52. Repeating this operation, the fabricated object having a three-dimensional structure can be formed. Note that the photocurable resin holding unit 52 is an example of a resin holder described in claims.

To the photocurable resin 51, a photocurable resin that is cured by two-photon absorption polymerization can be applied. For example, for the photocurable resin 51, a negative photoresist can be used that hardly shows absorption in a near-infrared wavelength region in order to prevent one-photon absorption and shows a high absorption in an ultraviolet wavelength region promoting two-photon absorption. The two-photon absorption polymerization will be described next.

### [Two-photon absorption polymerization]

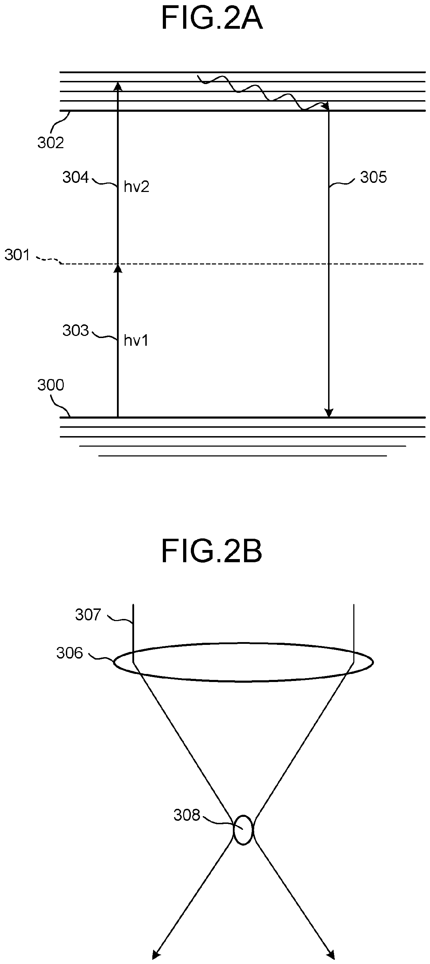

FIG. 2A is a diagram illustrating two-photon absorption polymerization according to an embodiment of the present disclosure. FIG. 2A is a diagram illustrating how an electron is excited from a ground level 300 to an excited level 302. The electron in the ground level 300 is excited to a virtual state 301 by the first photon (hv1). The electron in the virtual state 301 is excited to the excited level 302 by the second photon (hv2). In this way, excitation can be performed by photons each having energy that is approximately half the energy required for transition from the ground level 300 to the excited level 302. Such transition to the excited state by two photons is referred to as two-photon absorption. In order to generate the two-photon absorption, absorption of the second photon needs to be caused within approximately 1 fs from the absorption of the first photon. In other words, in a case where the second photon is not incident within approximately 1 fs from the absorption of the first photon, the two-photon absorption is not achieved.

Note that curing reaction of the photocurable resin 51 can be caused by energy released upon de-excitation 305 in which the electron transitions from the excited level 302 to the ground level 300.

FIG. 2B is a diagram illustrating the curing of the photocurable resin by the two-photon absorption polymerization according to the embodiment of the present disclosure. FIG. 2B is a diagram illustrating an example of application of laser light 307 collected by a lens 306, to the photocurable resin 51 (not illustrated). In order to cause the two-photon absorption polymerization, it is necessary to have a high photon density as described above. In other words, the two-photon absorption polymerization can be caused in an extremely narrow region near a focal point where the laser light 307 is collected. FIG. 2B illustrates a cured portion 308 formed in the vicinity of the focal point. Application of the two-photon absorption polymerization can achieve a voxel size with submicron precision that is equal to or below a diffraction limit. Here, the voxel represents a drawing unit in a three-dimensional space.

### [Spatial light modulation]

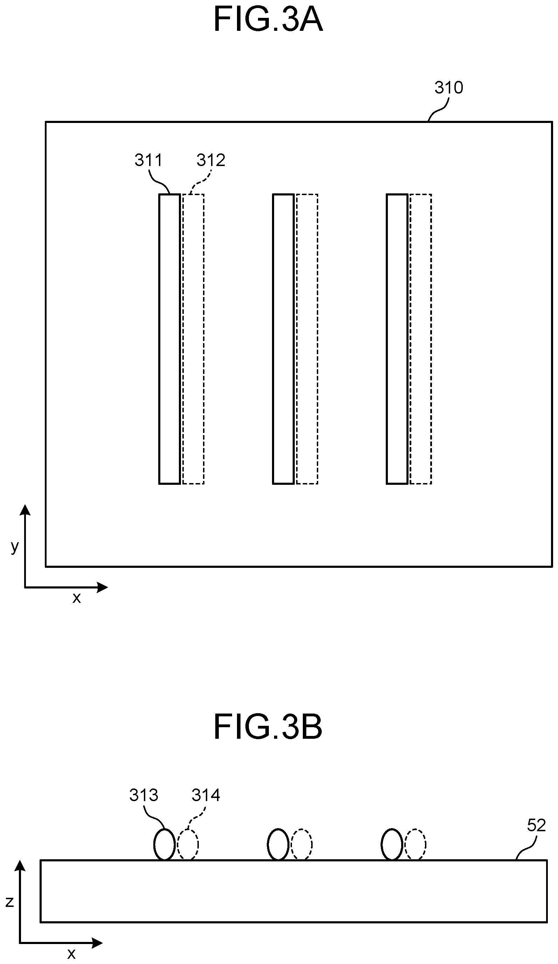

FIG. 3A is a diagram illustrating an example of spatial light modulation according to an embodiment of the present disclosure. FIG. 3A is a diagram illustrating an example of the spatial light modulation in the first spatial light modulation unit 30 and the second spatial light modulation unit 40. In the following description, the first spatial light modulation unit 30 and the second spatial light modulation unit 40 that use the DMD are assumed. In FIG. 3A, the rectangle represents a light receiving surface 310 of each of the first spatial light modulation unit 30 and the second spatial light modulation unit 40. Pixels each of which has a micromirror are arranged in a two-dimensional matrix on the light receiving surface 310 so that light can be reflected in a pattern according to input data.

FIG. 3A illustrates an exemplary pattern in which three straight lines each extending in a y-axis direction are arranged. A rectangular region indicated by a solid line in FIG. 3A represents a reflection pattern 311 in the first spatial light modulation unit 30. Furthermore, a rectangular region indicated by a broken line represents a reflection pattern 312 in the second spatial light modulation unit 40. The micromirrors included in these reflection patterns 311 and the like reflect incident light in a predetermined direction. Meanwhile, micromirrors not included in the reflection patterns 311 and the like do not contribute to reflection of the incident light. This configuration makes it possible for the first spatial light modulation unit 30 and the second spatial light modulation unit 40 to generate desired pattern beams 104 and 106.

As illustrated in FIG. 3A, the reflection pattern 312 of the second spatial light modulation unit 40 is arranged to be shifted in a predetermined direction relative to the reflection pattern 311 of the first spatial light modulation unit 30. FIG. 3A illustrates an example in which the reflection pattern 312 is arranged to be shifted in an x-axis direction. In this way, the reflection pattern 312 of the second spatial light modulation unit 40 is arranged in the vicinity of the reflection pattern 311 of the first spatial light modulation unit 30.

FIG. 3B is a diagram illustrating an example of forming the cured portions according to an embodiment of the present disclosure. FIG. 3B is a cross-sectional view showing cured portions 313 and 314 respectively formed in the irradiated regions on the photocurable resin holding unit 52, on the basis of the reflection patterns 311 and 312 shown in FIG. 3A. The cured portion 313 is formed by the pattern beam 105 based on the pattern beam 104 formed on the basis of the reflection pattern 311. Furthermore, the cured portion 313 is formed by the pattern beam 107 based on the pattern beam 106 formed on the basis of the reflection pattern 312. As illustrated in FIG. 3B, the cured portions 313 and 314 are also formed adjacent to each other in the x-axis direction, according to the reflection patterns 311 and 312 arranged adjacent to each other in the x-axis direction.

As illustrated in FIG. 2B, the voxel size can be reduced by applying the two-photon absorption polymerization. As a method of forming the cured portion having a relatively large size by applying this two-photon absorption polymerization, a method is known to perform a process of curing the photocurable resin 51 by applying the incident light 101 in multiple steps. Meanwhile, in the stereolithography apparatus 100 of the present disclosure, the incident light 101 is split by the splitting/coupling unit 20, and spatial modulation is performed by the first spatial light modulation unit 30 and the second spatial light modulation unit 40 to generate two pattern beams 104 and 106. Next, these pattern beams 104 and 106 are coupled by the splitting/coupling unit 20 and applied to the photocurable resin 51. Therefore, two cured portions can be formed by single application of the incident light 101, improving the throughput.

In addition, a single application of the incident light 101 can provide the cured portions, the number of which corresponds to that obtained after application thereof multiple number of times, and utilization of the incident light 101 can also be improved compared with the application of the incident light 101 multiple number of times. Therefore, the efficiency of the stereolithography apparatus 100 can be improved.

In this way, the stereolithography apparatus 100 of the present disclosure is configured to apply two pattern beams 104 and 106 generate by using the first spatial light modulation unit 30 and the second spatial light modulation unit 40 to quickly form the cured portions.

### (2. Second Embodiment)

In the stereolithography apparatus 100 of the first embodiment described above, the pattern beams 105 and 107 has been applied to the irradiated region substantially simultaneously. Meanwhile, a stereolithography apparatus 100 of a second embodiment of the present disclosure is different from the first embodiment described above in that application of the pattern beams 105 and 107 is shifted in time.

### [Configuration of stereolithography apparatus]

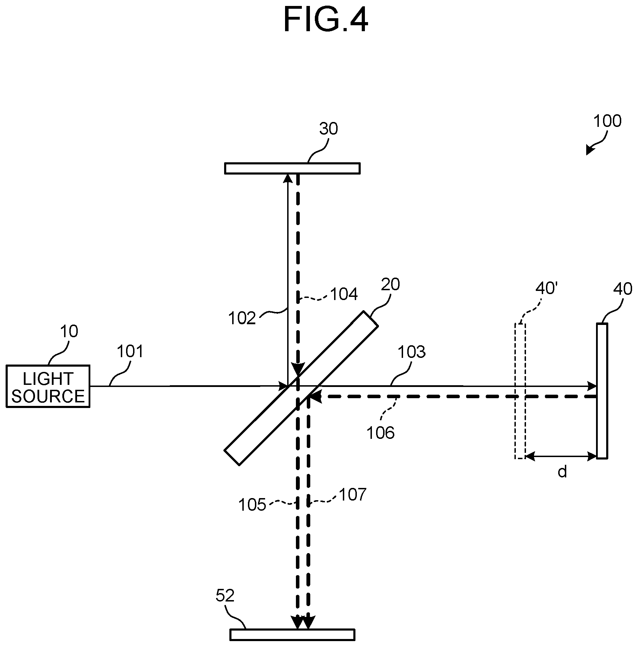

FIG. 4 is a diagram illustrating an exemplary configuration of a stereolithography apparatus according to the second embodiment of the present disclosure. FIG. 4 is a diagram illustrating the exemplary configuration of the stereolithography apparatus 100, similarly to FIG. 1. The stereolithography apparatus 100 of FIG. 4 is different from the stereolithography apparatus 100 of FIG. 1 in that the position of the second spatial light modulation unit 40 is adjusted. Note that in FIG. 4, illustration of the incident light 101, the split beams 102 and 103, and the photocurable resin holding unit 52 is simplified for convenience. In addition, illustration of the first optical system 11 and the second optical system 12 is omitted. The same applies to the following drawings of the stereolithography apparatus 100.

The stereolithography apparatus 100 of FIG. 4 is configured so that a propagation time of the optical path required from the splitting/coupling unit 20 to the splitting/coupling unit 20 via the second spatial light modulation unit 40 is different from a propagation time of the optical path required from the splitting/coupling unit 20 to the splitting/coupling unit 20 via the first spatial light modulation unit 30. Specifically, the stereolithography apparatus 100 of FIG. 4 is configured so that the optical path length from the splitting/coupling unit 20 to the splitting/coupling unit 20 via the first spatial light modulation unit 30 is longer than the optical path length from the splitting/coupling unit 20 to the splitting/coupling unit 20 via the second spatial light modulation unit 40.

A second spatial light modulation unit 40' of FIG. 4 indicated by a dotted line represents an arrangement position of the second spatial light modulation unit 40 in FIG. 1. The second spatial light modulation unit 40 of FIG. 4 is arranged at a position separated from the second spatial light modulation unit 40 of FIG. 1 by d in FIG. 4. Therefore, the pattern beam 107 reaches the irradiated region later than the pattern beam 105. When this delay time is set to approximately 1 fs or more, two-photon absorption polymerization by the pattern beams 105 and 107 can be reduced. In consideration of light speed, d needs to be 0.15 µm or more. Note that when the pulse width of the incident light 101 is considered, d needs to be further increased. For example, when the incident light 101 has a pulse width of 100 fs, d needs to be 15 µm or more.

Note that the second pattern according to the pattern beam 106 from the second spatial light modulation unit 40 is configured to be arranged at a position adjacent to the first pattern according to the pattern beam 104 from the first spatial light modulation unit 30. In this configuration, the second pattern is a pattern adjacent to the first pattern in a direction parallel to a surface of the photocurable resin 51 to which the pattern beams 105 and 107 are applied. The direction parallel to the surface of the photocurable resin 51 corresponds to a direction parallel to the irradiated region described above.

### [Two-photon absorption polymerization]

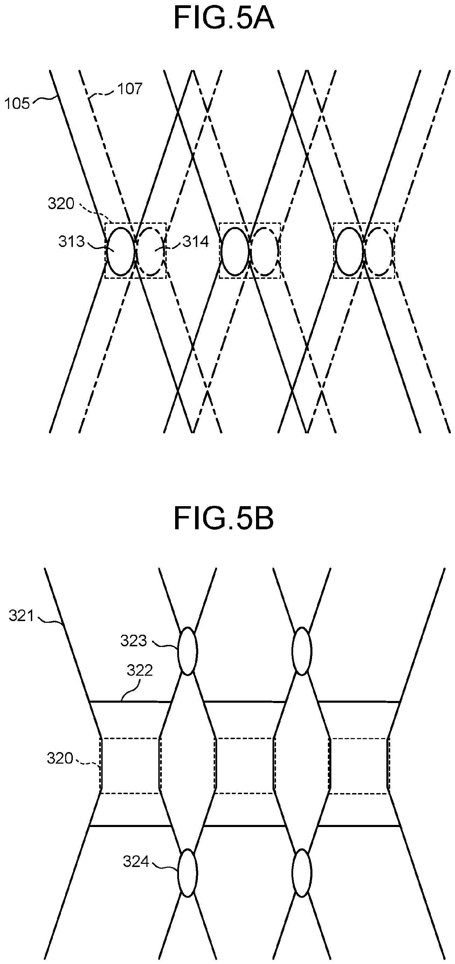

FIG. 5A is a diagram illustrating two-photon absorption polymerization according to the second embodiment of the present disclosure. FIG. 5A is a diagram illustrating an example in which the cured portions 313 and 314 are formed, similarly to FIG. 3B. Note that in FIG. 5A, the illustration of the photocurable resin holding unit 52 is omitted.

In FIG. 5A, a solid line represents the pattern beam 105. An alternate long and short dash line represents the pattern beam 107. These pattern beams 105 and 107 overlap in the vicinity of the irradiated region. Therefore, in FIG. 3B, when the incident light 101 has an intensity relatively high, there is a possibility that a cured portion may be generated in the overlapping portion. Meanwhile, in the stereolithography apparatus 100 of FIG. 4, application of the pattern beams 105 and 107 is shifted in time, and therefore, two-photon absorption polymerization is not caused in the overlapping region. This configuration has an effect that the cured portion is not formed in a region other than the cured portions 313 and 314. A rectangle indicated by a broken line in FIG. 5A represents a region 320 of cured portion including the cured portions 313 and 314.

FIG. 5B is a diagram illustrating a comparative example of the two-photon absorption polymerization. FIG. 5B is a diagram illustrating an example in which a cured portion 322 is formed using a pattern beam 321 having a focal size equal to the width of the region 320 of FIG. 5A. It can be seen that the focal size being large causes excessive polymerization and the cured portion 322 extends above and below the region 320. In addition, unnecessary cured portions 323 and 324 are caused in a region where the pattern beams 321 overlap each other.

### [Another Configuration of stereolithography apparatus]

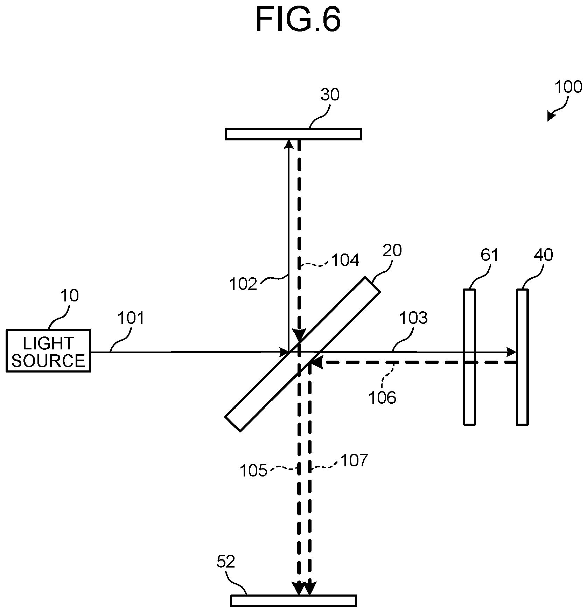

FIG. 6 is a diagram illustrating another exemplary configuration of the stereolithography apparatus according to the second embodiment of the present disclosure. FIG. 6 is a diagram illustrating an exemplary configuration of the stereolithography apparatus 100, similarly to FIG. 4. The stereolithography apparatus 100 of FIG. 6 is different from the stereolithography apparatus 100 of FIG. 4 in that the position of the second spatial light modulation unit 40 is similar to that of the stereolithography apparatus 100 of FIG. 1 and a propagation time adjustment unit 61 is further provided.

The propagation time adjustment unit 61 adjusts the propagation time of the incident light 101 passing through the propagation time adjustment unit 61. For example, the propagation time adjustment unit 61 of FIG. 6 is configured to elongate the propagation time of the incident light 101 passing through the propagation time adjustment unit 61. A glass plate can be applied to the propagation time adjustment unit 61. Arrangement of the propagation time adjustment unit 61 makes it possible to elongate a time required to reach the splitting/coupling unit 20 via the second spatial light modulation unit 40, shifting the arrival time of the pattern beams 105 and 107 to the irradiated region.

The other configurations of the stereolithography apparatus 100 are similar to those of the stereolithography apparatus 100 in the first embodiment of the present disclosure, and thus the description thereof will be omitted.

In this way, the stereolithography apparatus 100 according to the second embodiment of the present disclosure is configured to shift the arrival time of the pattern beams 105 and 107 to the irradiated region, and the formation of the unnecessary cured portions can be prevented.

### (3. Third Embodiment)

In the stereolithography apparatus 100 of the first embodiment described above, the incident light 101 from the light source 10 has been split by the splitting/coupling unit 20. On the other hand, a stereolithography apparatus 100 of a third embodiment of the present disclosure is different from the first embodiment described above in that the polarization direction of the incident light 101 is changed so that the incident light 101 is incident on the splitting/coupling unit.

### [Configuration of stereolithography apparatus]

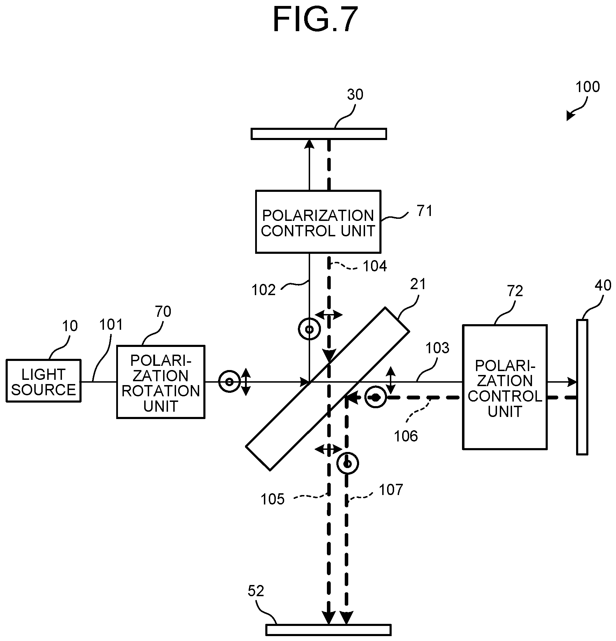

FIG. 7 is a diagram illustrating an exemplary configuration of the stereolithography apparatus according to the third embodiment of the present disclosure. FIG. 7 is a diagram illustrating the exemplary configuration of the stereolithography apparatus 100, similarly to FIG. 1. The stereolithography apparatus 100 of FIG. 7 is different from the stereolithography apparatus 100 of FIG. 1 in that a splitting/coupling unit 21 is provided instead of the splitting/coupling unit 20, and a polarization rotation unit 70 and polarization control units 71 and 72 are further provided.

The polarization rotation unit 70 converts input incident light 101 into incident light including two light beams having polarization directions different from each other by 90 degrees. In FIG. 7, double circles illustrated on light emitted from the polarization rotation unit 70 each represent a polarization direction perpendicular to the drawing, and double headed arrows each represent a polarization direction parallel to the drawing. The incident light 101 with the two polarization directions is incident on the splitting/coupling unit 21.

The splitting/coupling unit 21 is a splitting/coupling unit that splits the incident light according to the polarization directions of the incident light. The splitting/coupling unit 21 of FIG. 7 reflects light whose polarization direction is perpendicular to the drawing and splits the light in the first direction, and transmits light whose polarization direction is parallel to the drawing and splits the light in the second direction. Therefore, the split beam 102 becomes a beam whose polarization direction is perpendicular to the drawing, and the split beam 103 becomes a beam whose polarization direction is parallel to the drawing. The splitting/coupling unit 21 configured as described above is referred to as polarization beam splitter (PBS).

The polarization control units 71 and 72 each rotate the polarization direction of light that reciprocates through each of the polarization control units 71 and 72, by 90 degrees. The polarization control unit 71 is arranged in an optical path extending from the splitting/coupling unit 21 to the first spatial light modulation unit 30. The polarization control unit 72 is arranged in an optical path extending from the splitting/coupling unit 21 to the second spatial light modulation unit 40. While the split beam 102 is converted into the pattern beam 104 by the polarization control unit 71, the polarization direction changes by 90 degrees, and the pattern beam 104 whose polarization direction is parallel to the drawing is incident on the splitting/coupling unit 21 and is emitted as the pattern beam 105. Similarly, while the split beam 103 is converted into the pattern beam 106 by the polarization control unit 72, the polarization direction changes by 90 degrees, and the pattern beam 106 whose polarization direction is perpendicular to the drawing is incident on the splitting/coupling unit 21 and is emitted as the pattern beam 107.

The polarization beam splitter is used as the splitting/coupling unit 21 to reflect or transmit s-polarized light and p-polarized light and make the polarized light incident on different first spatial light modulation unit 30 and second spatial light modulation unit 40. Further introducing the polarization control units 71 and 72 makes it possible to rotate the polarization of light upon coupling by 90 degrees relative to the polarization of light upon splitting. This configuration makes it possible to reduce losses upon splitting and coupling light can be reduced.

Controlling the rotation angle of the linear polarized light by the polarization rotation unit 70 makes it possible to change a light splitting ratio to adjust the ratio of light beams modulated by the first spatial light modulation unit 30 and the second spatial light modulation unit 40. For example, by using the linear polarized light inclined by 45 degrees relative to an incidence surface, a ratio between the s-polarized light and the p-polarized light split by the splitting/coupling unit 21 can be set to 1: 1.

In addition, the polarization directions of the pattern beams 105 and 107 are orthogonal to each other, and therefore, two-photon absorption polymerization is suppressed. Therefore, it is possible to suppress excessive polymerization caused by the pattern beams 105 and 107.

### [Another Configuration of stereolithography apparatus]

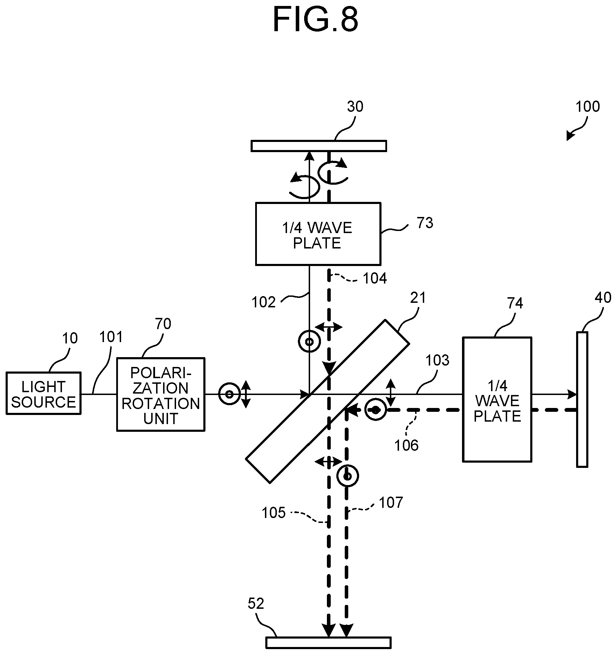

FIG. 8 is a diagram illustrating another exemplary configuration of the stereolithography apparatus according to the third embodiment of the present disclosure. FIG. 8 is a diagram illustrating an exemplary configuration of the stereolithography apparatus 100, similarly to FIG. 7. The stereolithography apparatus 100 of FIG. 8 is different from the stereolithography apparatus 100 of FIG. 7 in that 1/4 wave plates 73 and 74 are provided instead of the polarization control units 71 and 72.

The 1/4 wave plates 73 and 74 each bidirectionally convert light that passes through each of the 1/4 wave plates 73 and 74, into linear polarized light and circular polarized light. By reciprocating the incident light through the polarization control units 71 and 72, the polarization direction of the incident light can be rotated by 90 degrees.

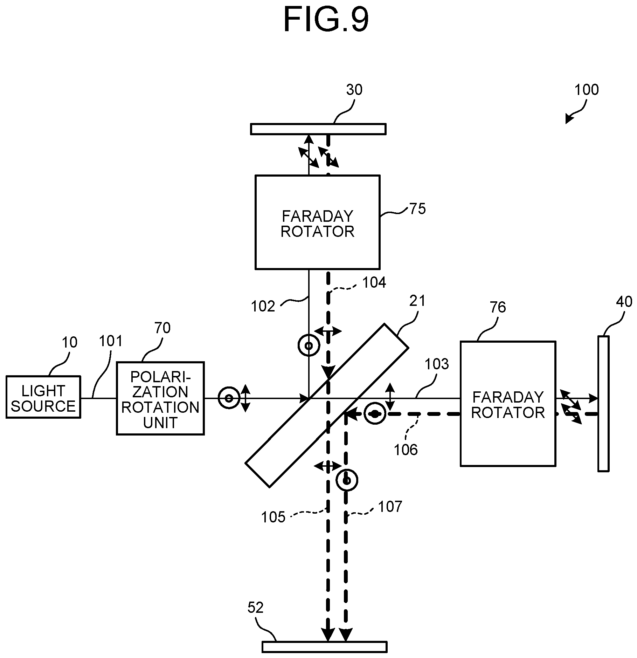

FIG. 9 is a diagram illustrating another exemplary configuration of the stereolithography apparatus according to the third embodiment of the present disclosure. FIG. 9 is a diagram illustrating an exemplary configuration of the stereolithography apparatus 100, similarly to FIG. 7. The stereolithography apparatus 100 of FIG. 9 is different from the stereolithography apparatus 100 of FIG. 7 in that Faraday rotators 75 and 76 are provided instead of the polarization control units 71 and 72.

The Faraday rotators 75 and 76 each rotate the polarization direction of light that passes through each of the Faraday rotators 75 and 76, by 45 degrees. By reciprocating the incident light through the Faraday rotators 75 and 76, the polarization direction of the incident light can be rotated by 90 degrees.

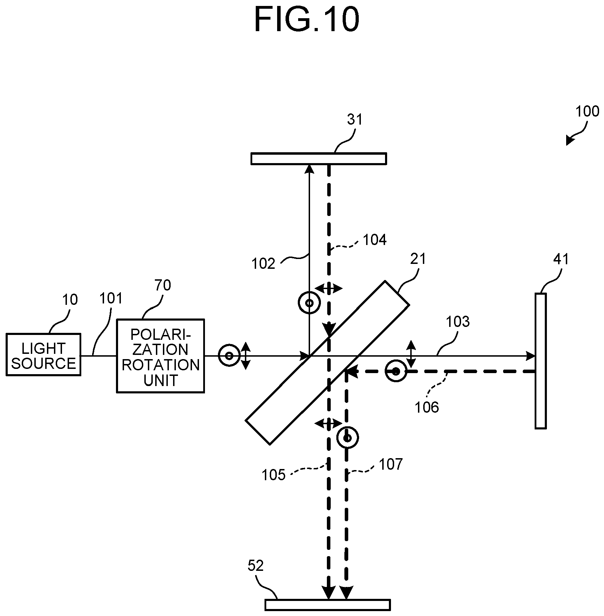

FIG. 10 is a diagram illustrating another exemplary configuration of the stereolithography apparatus according to the third embodiment of the present disclosure. FIG. 10 is a diagram illustrating an exemplary configuration of the stereolithography apparatus 100, similarly to FIG. 7. The stereolithography apparatus 100 of FIG. 10 is different from the stereolithography apparatus 100 of FIG. 7 in that the polarization control units 71 and 72 are omitted and a first spatial light modulation unit 31 and a second spatial light modulation unit 41 are provided instead of the first spatial light modulation unit 30 and the second spatial light modulation unit 40.

The first spatial light modulation unit 31 and the second spatial light modulation unit 41 each rotate the polarization direction of light from the splitting/coupling unit 21, by 90 degrees.

The other configurations of the stereolithography apparatus 100 are similar to those of the stereolithography apparatus 100 in the first embodiment of the present disclosure, and thus the description thereof will be omitted.

In this way, the stereolithography apparatus 100 according to the third embodiment of the present disclosure converts the incident light 101 into two light beams having different polarization directions, and performs splitting and coupling of light so that the pattern beams 105 and 107 having different polarization directions are incident on the irradiated region. This configuration makes it possible to suppress excessive polymerization caused by the pattern beams 105 and 107.

### (4. Fourth Embodiment)

In the stereolithography apparatus 100 of the first embodiment described above, the two cured portions 313 and 314 having been formed in the direction parallel to the irradiated region. Meanwhile, a stereolithography apparatus 100 of a fourth embodiment of the present disclosure is different from the first embodiment described above in that a plurality of cured portions are generated in a direction perpendicular to the irradiated region.

### [Configuration of stereolithography apparatus]

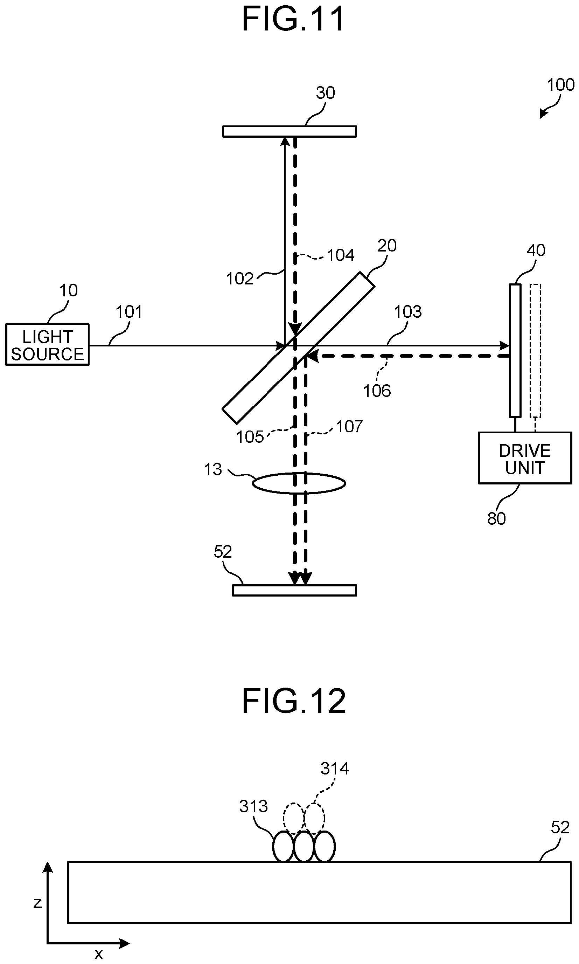

FIG. 11 is a diagram illustrating an exemplary configuration of the stereolithography apparatus according to the fourth embodiment of the present disclosure. FIG. 11 is a diagram illustrating the exemplary configuration of the stereolithography apparatus 100, similarly to FIG. 1. The stereolithography apparatus 100 of FIG. 11 is different from the stereolithography apparatus 100 of FIG. 1 in that a light collection unit 13 and a drive unit 80 are further provided.

The light collection unit 13 collects the pattern beams 105 and 107 from the splitting/coupling unit 20.

The drive unit 80 adjusts the position of the second spatial light modulation unit 40. The drive unit 80 can include, for example, a piezoelectric element. The second spatial light modulation unit 40 of FIG. 11 is adjusted to a position where an optical path from the splitting/coupling unit 20 to the splitting/coupling unit 20 via the second spatial light modulation unit 40 has a length different from that of an optical path in the first spatial light modulation unit 30. Adjusting the optical path length extending through the second spatial light modulation unit 40 makes it possible to adjust a focal position of the pattern beam 107 to a position different from that of the pattern beam 105.

### [Two-photon absorption polymerization]

FIG. 12 is a diagram illustrating two-photon absorption polymerization according to the fourth embodiment of the present disclosure. FIG. 12 is a diagram illustrating an example in which the cured portions 313 and 314 are formed, similarly to FIG. 3B. The cured portion 314 of FIG. 12 is formed to be shifted in a direction perpendicular to the irradiated region, that is, in a z-axis direction. FIG. 12 illustrates an example of the cured portion 314 that is formed on an upper layer of the cured portion 313. Moving the position of the second spatial light modulation unit 40 in a direction separated from the splitting/coupling unit 20 by the drive unit 80 of FIG. 11, the focal position of the pattern beam 107 can be shifted above that of the pattern beam 105.

Note that the stereolithography apparatus 100 of the present disclosure is not limited to this example. For example, in the stereolithography apparatus 100 described in FIG. 9, use of a spatial light modulation unit for phase modulation, for the first spatial light modulation unit 30 and the second spatial light modulation unit 40 makes it possible to change the focal position in the z-axis direction in FIG. 12. Furthermore, a data signal of each pixel of the second spatial light modulation unit 40 can be adjusted to form an image having a desired pattern at a desired position on the z-axis.

The other configurations of the stereolithography apparatus 100 are similar to those of the stereolithography apparatus 100 in the first embodiment of the present disclosure, and thus the description thereof will be omitted.

In this way, the stereolithography apparatus 100 of the fourth embodiment of the present disclosure is configured to shift the focal positions of the pattern beams 105 and 107 in the z-axis direction. This configuration makes it possible to form the plurality of cured portions quickly.

Note that the configuration of the second embodiment of the present disclosure can be applied to other embodiments. Specifically, the configuration of the stereolithography apparatus 100 of FIG. 4 that is configured so that the propagation time of the optical path required from the splitting/coupling unit 20 to the splitting/coupling unit 20 via the second spatial light modulation unit 40 is different from the propagation time of the optical path required from the splitting/coupling unit 20 to the splitting/coupling unit 20 via the first spatial light modulation unit 30 can be applied to the third and fourth embodiments of the present disclosure.

Note that the effects described herein are merely examples and are not limited to the description, and other effects may be provided.

Note that the present technology can also have the following configurations.
(1) A stereolithography apparatus comprising:
   a splitting/coupling unit that splits incident light applied to a photocurable resin to form a cured portion, in a first direction and a second direction, couples light beams obtained by splitting incident light and being incident from the first direction and the second direction, and emits the coupled light in a third direction; and
   a first spatial light modulation unit that is arranged in the first direction to modulate a light beam from the splitting/coupling unit into a light beam having a first pattern having a pattern of the cured portion, and emit the light beam having the first pattern to the splitting/coupling unit, for coupling of the light beam having the first pattern; and
   a second spatial light modulation unit that is arranged in the second direction to modulate a light beam from the splitting/coupling unit into a light beam having a second pattern in the vicinity of the first pattern, and emit the light beam having the second pattern to the splitting/coupling unit, for coupling of the light beam having the second pattern.
(2) The stereolithography apparatus according to the above (1), wherein
   the incident light is laser light from a femtosecond laser light source.
(3) The stereolithography apparatus according to the above (1) or (2), wherein
   the first spatial light modulation unit modulates the light beam from the splitting/coupling unit into the light beam having the first pattern, and reflects the light beam having the first pattern to the splitting/coupling unit, and
   the second spatial light modulation unit modulates the light beam from the splitting/coupling unit into the light beam having the second pattern, and reflects the light beam having the second pattern to the splitting/coupling unit.
(4) The stereolithography apparatus according to any one of the above (1) to (3), wherein
   the second pattern is a pattern adjacent to the first pattern in a direction parallel to a surface of the photocurable resin.
(5) The stereolithography apparatus according to the above (4), wherein
   in the second spatial light modulation unit, a propagation time of an optical path extending from the splitting/coupling unit to the splitting/coupling unit via the second spatial light modulation unit is different from a propagation time of the optical path in the first spatial light modulation unit.
(6) The stereolithography apparatus according to the above (5), wherein
   the second spatial light modulation unit is arranged at a position where the optical path has a length different from that of the optical path in the first spatial light modulation unit.
(7) The stereolithography apparatus according to the above (5), further comprising
   a propagation time adjustment unit that is arranged in any of the optical path in the first spatial light modulation unit and the optical path in the second spatial light modulation unit to adjust a propagation time of light.
(8) The stereolithography apparatus according to the above (4), further comprising
   a polarization rotation unit that is arranged between a light source generating the incident light and the splitting/coupling unit to convert the incident light into two incident light beams having polarization directions different from each other by 90 degrees, wherein
   the splitting/coupling unit reflects one of the two incident light beams to split the light beam in the first direction, and transmits the other of the two incident light beams to split the light beam in the second direction.
(9) The stereolithography apparatus according to the above (8), further comprising:
   a first polarization control unit that is arranged in an optical path extending from the splitting/coupling unit to the splitting/coupling unit via the first spatial light modulation unit to rotate a polarization direction of light reciprocating through the first polarization control unit, by 90 degrees; and
   a second polarization control unit that is arranged in an optical path extending from the splitting/coupling unit to the splitting/coupling unit via the second spatial light modulation unit to rotate a polarization direction of light reciprocating through the second polarization control unit, by 90 degrees.
(10) The stereolithography apparatus according to the above (8), wherein
   the first spatial light modulation unit rotates a polarization direction of the light from the splitting/coupling unit by 90 degrees, and
   the second spatial light modulation unit rotates a polarization direction of the light from the splitting/coupling unit by 90 degrees.
(11) The stereolithography apparatus according to the above (1), further comprising
   a light collection unit that is arranged in the third direction to collect light beams emitted by the splitting/coupling unit, wherein
   the second spatial light modulation unit is adjusted to a position where an optical path extending from the splitting/coupling unit to the splitting/coupling unit via the second spatial light modulation unit has a length different from that of the optical path in the first spatial light modulation unit.
(12) The stereolithography apparatus according to the above (11), further comprising
   a drive unit that adjusts the position of the second spatial light modulation unit.
(13) The stereolithography apparatus according to the above (11), further comprising
   a polarization rotation unit that is arranged between a light source generating the incident light and the splitting/coupling unit to convert the incident light into two incident light beams having polarization directions different from each other by 90 degrees, wherein
   the splitting/coupling unit reflects one of the two incident light beams to split the light beam in the first direction, and transmits the other of the two incident light beams to split the light beam in the second direction.
(14) The stereolithography apparatus according to any one of the above (1) to (13), further comprising
   a resin holding portion that is arranged in the third direction to hold the photocurable resin, and hold the cured portion formed by light emitted from the splitting/coupling unit.
(15) The stereolithography apparatus according to any one of the above (1) to (14), further comprising
   a first optical system that is arranged between a light source that generates the incident light and the splitting/coupling unit to enlarge a beam diameter of the laser light.
(16) The stereolithography apparatus according to any one of the above (1) to (15), further comprising
   a second optical system that reduces the light emitted from the splitting/coupling unit.

### Reference Signs List

10 LIGHT SOURCE
11 FIRST OPTICAL SYSTEM
12 SECOND OPTICAL SYSTEM
13 LIGHT COLLECTION UNIT
20, 21 SPLITTING/COUPLING UNIT
30, 31 FIRST SPATIAL LIGHT MODULATION UNIT
40, 41 SECOND SPATIAL LIGHT MODULATION UNIT
51 PHOTOCURABLE RESIN
52 PHOTOCURABLE RESIN HOLDING UNIT
61 PROPAGATION TIME ADJUSTMENT UNIT
70 POLARIZATION ROTATION UNIT
71, 72 POLARIZATION CONTROL UNIT
73, 74 1/4 WAVE PLATE
75, 76 FARADAY ROTATOR
80 DRIVE UNIT
100 STEREOLITHOGRAPHY APPARATUS

## Claims

1. A stereolithography apparatus comprising:
a splitting/coupling unit that splits incident light applied to a photocurable resin to form a cured portion, in a first direction and a second direction, couples light beams obtained by splitting incident light and being incident from the first direction and the second direction, and emits the coupled light in a third direction; and
a first spatial light modulation unit that is arranged in the first direction to modulate a light beam from the splitting/coupling unit into a light beam having a first pattern having a pattern of the cured portion, and emit the light beam having the first pattern to the splitting/coupling unit, for coupling of the light beam having the first pattern; and
a second spatial light modulation unit that is arranged in the second direction to modulate a light beam from the splitting/coupling unit into a light beam having a second pattern in the vicinity of the first pattern, and emit the light beam having the second pattern to the splitting/coupling unit, for coupling of the light beam having the second pattern.

2. The stereolithography apparatus according to claim 1, wherein
the incident light is laser light from a femtosecond laser light source.

3. The stereolithography apparatus according to claim 1, wherein
the first spatial light modulation unit modulates the light beam from the splitting/coupling unit into the light beam having the first pattern, and reflects the light beam having the first pattern to the splitting/coupling unit, and
the second spatial light modulation unit modulates the light beam from the splitting/coupling unit into the light beam having the second pattern, and reflects the light beam having the second pattern to the splitting/coupling unit.

4. The stereolithography apparatus according to claim 1, wherein
the second pattern is a pattern adjacent to the first pattern in a direction parallel to a surface of the photocurable resin.

5. The stereolithography apparatus according to claim 4, wherein
in the second spatial light modulation unit, a propagation time of an optical path extending from the splitting/coupling unit to the splitting/coupling unit via the second spatial light modulation unit is different from a propagation time of the optical path in the first spatial light modulation unit.

6. The stereolithography apparatus according to claim 5, wherein
the second spatial light modulation unit is arranged at a position where the optical path has a length different from that of the optical path in the first spatial light modulation unit.

7. The stereolithography apparatus according to claim 5, further comprising
a propagation time adjustment unit that is arranged in any of the optical path in the first spatial light modulation unit and the optical path in the second spatial light modulation unit to adjust a propagation time of light.

8. The stereolithography apparatus according to claim 4, further comprising
a polarization rotation unit that is arranged between a light source generating the incident light and the splitting/coupling unit to convert the incident light into two incident light beams having polarization directions different from each other by 90 degrees, wherein
the splitting/coupling unit reflects one of the two incident light beams to split the light beam in the first direction, and transmits the other of the two incident light beams to split the light beam in the second direction.

9. The stereolithography apparatus according to claim 8, further comprising:
a first polarization control unit that is arranged in an optical path extending from the splitting/coupling unit to the splitting/coupling unit via the first spatial light modulation unit to rotate a polarization direction of light reciprocating through the first polarization control unit, by 90 degrees; and
a second polarization control unit that is arranged in an optical path extending from the splitting/coupling unit to the splitting/coupling unit via the second spatial light modulation unit to rotate a polarization direction of light reciprocating through the second polarization control unit, by 90 degrees.

10. The stereolithography apparatus according to claim 8, wherein
the first spatial light modulation unit rotates a polarization direction of the light from the splitting/coupling unit by 90 degrees, and
the second spatial light modulation unit rotates a polarization direction of the light from the splitting/coupling unit by 90 degrees.

11. The stereolithography apparatus according to claim 1, further comprising
a light collection unit that is arranged in the third direction to collect light beams emitted by the splitting/coupling unit, wherein
the second spatial light modulation unit is adjusted to a position where an optical path extending from the splitting/coupling unit to the splitting/coupling unit via the second spatial light modulation unit has a length different from that of the optical path in the first spatial light modulation unit.

12. The stereolithography apparatus according to claim 11, further comprising
a drive unit that adjusts the position of the second spatial light modulation unit.

13. The stereolithography apparatus according to claim 11, further comprising
a polarization rotation unit that is arranged between a light source generating the incident light and the splitting/coupling unit to convert the incident light into two incident light beams having polarization directions different from each other by 90 degrees, wherein
the splitting/coupling unit reflects one of the two incident light beams to split the light beam in the first direction, and transmits the other of the two incident light beams to split the light beam in the second direction.

14. The stereolithography apparatus according to claim 1, further comprising
a resin holding portion that is arranged in the third direction to hold the photocurable resin, and hold the cured portion formed by light emitted from the splitting/coupling unit.

15. The stereolithography apparatus according to claim 1, further comprising
a first optical system that is arranged between a light source that generates the incident light and the splitting/coupling unit to enlarge a beam diameter of the incident light.

16. The stereolithography apparatus according to claim 1, further comprising
a second optical system that reduces the light emitted from the splitting/coupling unit.
